Europäisches Patentamt

European Patent Office

Office européen des brevets

(11) Numéro de publication: **0 538 737 A1**

# (12) DEMANDE DE BREVET EUROPEEN

(21) Numéro de dépôt: **92117630.1**

(22) Date de dépôt: **15.10.92**

(51) Int. Cl.5: **H04L 27/22**

(30) Priorité: **21.10.91 FR 9112964**

(43) Date de publication de la demande:
**28.04.93 Bulletin 93/17**

(84) Etats contractants désignés:
**DE ES FR GB IT NL SE**

(71) Demandeur: **ALCATEL TELSPACE**
**5, rue Noel Pons**
**F-92734 Nanterre Cédex(FR)**

(72) Inventeur: **Peltier, Jacques**
**9, rue Didot**
**F-75014 Paris(FR)**

(74) Mandataire: **Weinmiller, Jürgen et al**
**Lennéstrasse 9 Postfach 24**
**W-8133 Feldafing (DE)**

(54) **Détection de faux accrochages, et démodulation numérique cohérente l'utilisant.**

(57) Dans le procédé de détection de faux accrochages, on récupère les trains horloges correspondant à deux trains de signaux modulés initialement décalés, on observe le décalage entre lesdits trains horloges et on détecte un faux accrochage lorsque ce décalage change de signe. Le procédé de démodulation met en oeuvre ce procédé de détection de faux accrochages.

Le dispositif pour la mise en oeuvre du procédé de détection de faux accrochages comprend une bascule (12) en série avec un monostable (13).

FIG.1

La présente invention est relative a un procédé de détection de faux accrochages d'un signal de référence, issu d'un oscillateur local réception sur un signal modulé en modulation quadratique numérique plurivalente décalée, ainsi qu'à un procédé de démodulation cohérente utilisant ce procédé de détection de faux accrochage. Dans une mise en oeuvre particulière de ces procédés, il est possible de déterminer la phase de la porteuse du signal à démoduler. L'invention concerne encore des dispositifs pour la mise en oeuvre de ces procédés.

Un exemple de modulation numérique plurivalente décalée est la modulation par déplacement de phase à porteuses en quadrature, avec décalage, dite "OQPSK" (Offset Quadrature Phase Schift Keying, en langue anglaise), et notamment la modulation par déplacement de phase avec décalage à deux porteuses chacune à deux niveaux, dite modulation "MDP4". En modulation directe en hyperfréquence, deux trains binaires décalés temporellement y sont mélangés à deux porteuses oscillant en hyperfréquence et en quadrature, puis sommés et émis. Les deux porteuses sont issues d'un même oscillateur oscillant en hyperfréquence.

A la réception, le signal à démoduler est éventuellement filtré, puis mélangé avec deux porteuses de réception en quadrature qui, théoriquement, sont de même fréquence que les porteuses d'émission et sont en phase avec ces dernières (démodulation cohérente). En sortie des mélangeurs, se retrouvent des signaux en bande de base qui correspondent aux trains binaires initiaux.

Pour réaliser le calage en phase de l'oscillateur de réception, on utilise habituellement des "systèmes de récupération de porteuses", tels que classiquement la boucle de COSTAS et la boucle de LECLERT et VANDAMME. Ces boucles sont stables lorsque l'oscillateur d'émission et l'oscillateur de réception sont en phase. Cependant, elles présentent également d'autres points de stabilité. Ainsi, la boucle de COSTAS est stable pour:

$$F_{ole}\text{-}F_{olr} = +/- nD/4, \text{ et}$$

la boucle de LECLERT et VANDAMME est stable pour:

$$F_{ole}\text{-}F_{olr} = +/- nD/(4.k),$$

où $F_{ole}$ et $F_{olr}$ sont les fréquences respectivement de l'oscillateur local d'émission et de l'oscillateur local de réception et où n et k sont des entiers, D étant le débit symbolique, c'est-à-dire le débit des mots sur chaque voie.

Lorsque l'on se trouve en un point de stabilité où la fréquence de réception est différente de la fréquence d'émission, on est en présence d'un "faux accrochage".

Dans la pratique, du fait de la forte dérive, notamment en température, des oscillateurs utilisés (dérive bien au-delà de la largeur de bande, généralement inférieure à 300 KHz, des systèmes de récupération de porteuses), il est nécessaire, d'intégrer au récepteur un dispositif dit de "recherche lente" qui est une rampe permettant de suivre les dérives en fréquence de l'oscillateur local réception, en température notamment.

Pour réaliser la détection d'un faux accrochage, de nombreux dispositifs sont déjà connus. Notamment, il a été proposé par la demanderesse dans sa demande de brevet français publiée sous le N° 2620885, un procédé de détection de faux accrochages reposant sur l'observation de l'ouverture temporelle du diagramme de l'oeil (diagramme observé sur un oscilloscope synchronisé par l'horloge des trains après restitution d'un signal en bande de base et avant régénération). Lorsque la boucle de récupération de porteuses est sur un point de stabilité, l'oeil est ouvert. Cependant, l'ouverture temporelle de l'oeil est moins importante lorsqu'on se trouve en présence d'un faux accrochage. Il était donc proposé dans cette demande de brevet de réaliser un pointage de l'oeil pour en détecter sa fermeture.

Un autre système utilisé est la reconnaissance d'un mot de verrouillage de trame par le récepteur. Un tel système présente cependant certains inconvénients. Il nécessite la présence de la carte générant ce mot de verrouillage de trame et de la carte reconnaissant ce mot. Si l'on supprime une de ces cartes, la détection n'est plus assurée. En outre, il peut arriver, selon la place des bits du mot de verrouillage dans la trame que l'on retrouve le mot de verrouillage pour des points de faux accrochage.

La présente invention propose quant à elle un procédé de détection de faux accrochages qui est d'un type nouveau et qui permet, pour des liaisons hertziennes à modulation numérique plurivalente décalée, notamment de pallier les différents inconvénients des systèmes à reconnaissance d'un mot de verrouillage. Le procédé de détection de faux accrochages proposé par l'invention permet en outre, dans certaines de ses mises en oeuvre, la détermination modulo $\pi$ de la phase de la porteuse.

La présente invention a donc pour objet un procédé de détection de faux accrochages d'un signal de référence sur un signal modulé en modulation quadratique numérique plurivalente décalée et à démoduler en démodulation numérique cohérente, dans lequel:

- on récupère à partir des signaux en bande de base des trains de signaux horloges synchrones avec lesdits signaux en bande de base, caractérisé:

- en ce qu'on observe le décalage entre lesdits trains de signaux horloges, et
- en ce qu'on détecte un faux accrochage lorsque le signe de ce décalage n'est pas constant.

Le signal à démoduler aura été initialement mélangé avec deux porteuses en quadrature sensées correspondre en phase et en fréquence aux porteuses émises par l'oscillateur local d'émission, de façon à obtenir lesdits trains de signaux en bande de base. En cas de bon accrochage, le décalage entre les trains de signaux horloge est constant.

L'invention a encore pour objet un procédé de démodulation numérique cohérente d'un signal initialement modulé en modulation numérique plurivalente décalée dans lequel:

- on mélange ledit signal à démoduler avec deux signaux de référence en quadrature afin d'obtenir les trains de signaux analogiques en bande de base correspondant au train de signaux binaires initiaux,
- on régénère les trains de signaux en bande de base ainsi obtenus,
- on corrige le signal de référence, lorsqu'un faux accrochage est détecté, pour accrocher celui-ci en fréquence et en phase sur le signal à démoduler, caractérisé en ce qu'on détecte à cet effet un faux accrochage à l'aide du procédé de détection précité.

De façon avantageuse, on détecte la phase du signal de référence module $\pi$ lorsque le signe du décalage entre lesdits signaux d'horloge prend une valeur prédéterminée.

De façon préférentielle, on mélange le signal à démoduler avec le signal de référence et avec un signal en quadrature par rapport audit signal de référence,

- on récupère les trains de signaux horloges synchronisés avec les signaux en bande de base ainsi obtenus,
- on observe le signe du décalage entre les deux trains de signaux horloges ainsi obtenus,
- on ne corrige le signal de référence en phase que lorsque le train de signaux horloge issu du mélange du signal à démoduler avec le signal de référence est en avance (en retard) par rapport aux trains de signaux horloges obtenus par le mélange du signal en quadrature par rapport au signal de référence avec le signal à démoduler, de sorte que la porteuse sur laquelle le signal de référence est accroché est déterminée modulo $\pi$.

Un autre objet encore de l'invention est un dispositif pour la mise en oeuvre du procédé de détection précité, caractérisé en ce qu'il comporte des moyens aptes à détecter des modifications du signe du décalage entre lesdits trains horloges.

Préférentiellement, lesdits moyens comportent une bascule recevant en son entrée horloge le train de signaux horloge d'une voie de démodulation et en une autre entrée le train de signaux horloge d'une autre voie, ainsi qu'un circuit monostable recevant en entrée le signal en sortie de ladite bascule.

Ladite bascule peut notamment être une bascule du type D.

Un objet encore de l'invention est un dispositif pour la mise en oeuvre du procédé de démodulation précité, comportant un circuit de démodulation direct pour le mélange du signal à démoduler avec des signaux correspondant en fréquence et en phase au signal de référence, ledit circuit de démodulation comportant un oscillateur de réception duquel est issu le signal de référence, les différentes voies en sortie du circuit de démodulation étant reliées chacune d'une part à un circuit de récupération de rythme et d'autre part à un échantillonneur régénérateur à deux entrées dont une reçoit le signal issu sur ladite voie du circuit de démodulation et dont l'autre reçoit le signal horloge en sortie du circuit de récupération de rythme, ledit dispositif comportant également un dispositif de récupération de porteuses, ainsi qu'un dispositif à rampe de tension, asservissant ledit oscillateur de réception pour le commander respectivement en phase et en fréquence, caractérisé en ce qu'il comporte un dispositif de détection de faux accrochage du type précité, en fonction des informations de sortie duquel ledit dispositif de récupération de porteuse et/ou ledit dispositif à rampe de tension sont actionnés.

Avantageusement, ce dispositif comporte des moyens de validation du dispositif de récupération de porteuses, ces moyens ne validant ledit dispositif de récupération de porteuses que lorsque le signal en sortie de la bascule prend une valeur prédéterminée.

La description qui suit de plusieurs modes de mise en oeuvre et de réalisation de l'invention est purement illustrative et non limitative. Elle doit être lue en regard des dessins annexés sur lesquels:

La Figure 1 est une représentation schématique d'un dispositif de démodulation mettant en oeuvre un procédé de détection de faux accrochages conforme à l'invention.

La Figure 2 est une représentation schématique d'une réalisation possible d'un dispositif pour la mise en oeuvre du procédé de détection de faux accrochages conforme à l'invention.

La Figure 3 est une représentation schématique d'une autre réalisation possible d'un dispositif pour la mise en oeuvre du procédé de détection de faux accrochages conforme à l'invention, cette réalisation permettant dans la mise en oeuvre du procédé de démodulation cohérente conforme à l'invention, la détermination modulo $\pi$ de la phase de la porteuse.

Les Figures 4a à 4d et 5a à 5c sont des représentations schématiques des signaux en entrée des différents éléments du dispositif de la figure 2 ou de la figure 3, respectivement pour un accrochage correct et un faux accrochage.

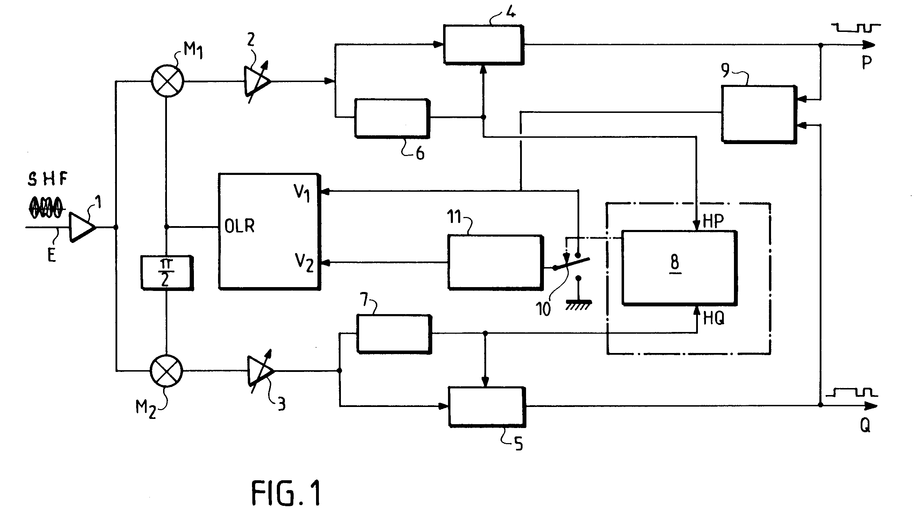

On se réfère à la Figure 1. Le dispositif de réception et de détermination qui y a été représenté reçoit en son entrée E un signal SHF en hyperfréquence constitué, ainsi que cela a été indiqué précédemment, de deux porteuses en quadrature de phase modulées par deux signaux numériques synchrones décalés et formant un signal modulé à quatre états de phase.

Ce dispositif de réception comporte principalement un oscillateur local de réception OLR qui génère deux porteuses orthogonales, ainsi que deux mélangeurs linéaires M1 et M2. Ces mélangeurs $M_1$ et $M_2$ reçoivent chacun en entrée le signal hyperfréquence issu d'un filtre 1 d'entrée et respectivement, l'une des deux porteuses générées par l'oscillateur OLR. En sortie, ces modulateurs M1 et M2 sont reliés aux entrées de divers éléments de traitement du signal en bande de base, schématisés sur la figure par des amplificateurs à commande automatique de gain référencés respectivement par 2 et 3.

Le signal en sortie de chacun de ces éléments de traitement 2 et 3 est ensuite envoyé, d'une part, sur un régénérateur-échantillonneur référencé respectivement par 4 et 5 et, d'autre part, sur un ensemble de récupération de rythme référencé quant à lui respectivement par 6 et 7.

En sortie du régénérateur-échantillonneur 4 ou 5, se trouve le signal P ou Q régénéré. Ces signaux P ou Q correspondent aux signaux binaires décalés initiaux.

En sortie de l'horloge de rythme de l'ensemble de récupération de rythme 6 ou 7 et correspondant au signal P ou Q sont produits respectivement des signaux horloge HP et HQ. Un tel signal HP ou HQ est envoyé d'une part, sur une deuxième entrée de l'ensemble régénérateur-échantillonneur 4 ou 5 correspondant, et d'autre part, respectivement sur une des deux entrées d'un dispositif de détection de faux accrochages 8 commun aux deux voies.

Le signal P ou Q est quant à lui envoyé en sortie du dispositif de réception et de démodulation ainsi que respectivement à chacune des deux entrées d'un même dispositif de récupération de porteuses 9. Ce dispositif 9 forme avec le reste du dispositif de réception et de démodulation une boucle, dite boucle rapide, telle qu'une boucle de COSTAS ou une boucle de LECLERT et VANDAMME dont la sortie asservit une entrée de tension V1 de l'oscillateur OLR.

Le système de détection de faux accrochages 8 commande, le basculement d'un interrupteur 10 monté à l'entrée d'un générateur rampe de tension 11 destiné à asservir en sortie une deuxième entrée de tension V2 de l'oscillateur OLR afin de réaliser une boucle lente à rampe de tension. Ledit interrupteur 10 met l'entrée dudit générateur 11 formant rampe de tension en contact avec respectivement, selon sa position, la masse ou la tension en sortie du dispositif de récupération de porteuses 9. Selon la position dudit interrupteur 10, par conséquent, la fréquence de l'oscillateur de réception OLR est commandée par le générateur de rampe monotone 11, ou par le dispositif de récupération de porteuses 9, qui sert de boucle rapide, et ajuste la phase de l'oscillateur OLR de réception (boucle de verrouillage de phase).

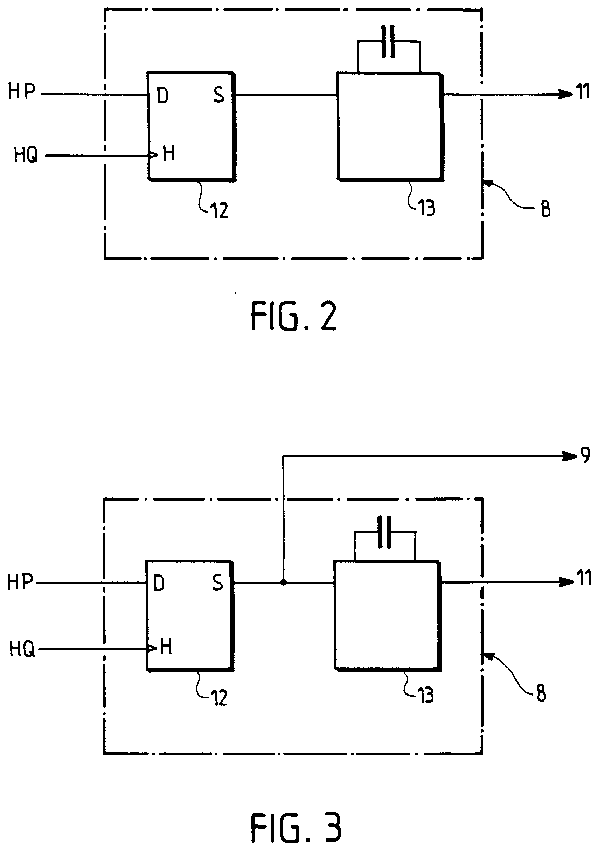

On se réfère maintenant à la Figure 2, sur laquelle a été représenté schématiquement un mode de réalisation possible pour le système de détection de faux accrochage 8. Ce système 8 comprend une bascule 12 du type D, ainsi qu'un circuit 13 monostable réenclenchable, tous deux par exemple à fronts montants. L'entrée du monostable 13 est montée en sortie de ladite bascule 12. La bascule 12 reçoit en son entrée D le signal HP horloge de la voie P et sur son entrée M horloge le signal horloge de la voie Q. Une autre variante de système de détection de faux accrochage a encore été représentée sur la figure 3 et sera décrite plus loin.

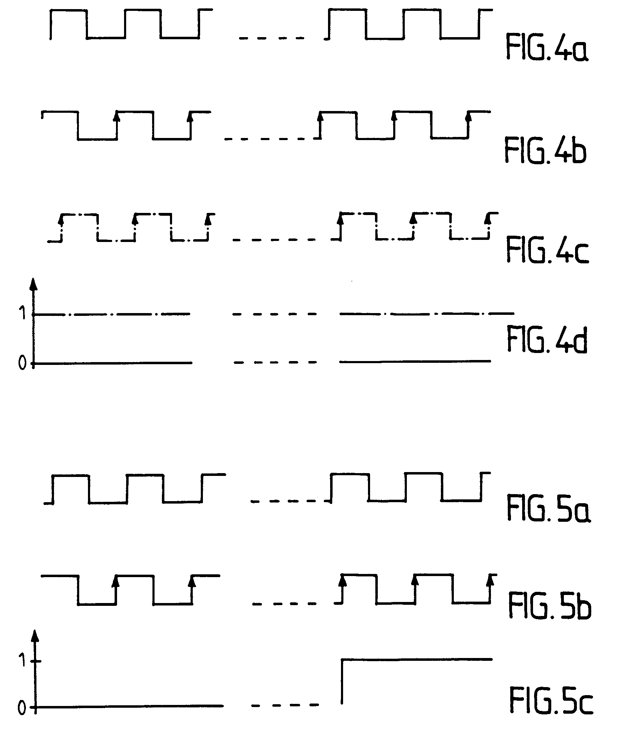

Si l'oscillateur OLR local est parfaitement cohérent, les signaux horloges HP et HQ des voies P et Q sont décalés l'un par rapport à l'autre avec un décalage constant. On a représenté sur la figure 4a le signal HP et sur les figures 4b et 4c le signal HQ respectivement dans deux cas de décalage possible par rapport au signal HP. Le signal HQ de la figure 4b est en retard par rapport au signal HP; le signal HQ de la figure 4c est en avance par rapport au signal HP. Le signal en sortie S de la bascule 12 sur la figure 4d a été représenté en traits pleins ou en traits mixtes selon que le signal HQ correspond à celui de la figure 4b ou à celui de la figure 4c. Aux fronts montants de l'horloge de la voie Q (représentés par des flèches sur les figures), le signal horloge de la voie P sera toujours soit 1 (traits mixtes), soit 0 (traits pleins). La sortie S de la bascule 12 sera donc constante. Le monostable 13 ne détectera aucun front montant et restera au niveau 0.

Si, au contraire, on se trouve au niveau d'un faux accrochage, tout se passe en fonction du temps d'échantillonnage comme si le système changeait régulièrement de porteuse en se déphasant. Sur le diagramme des signaux, la constellation des signaux binaires visualisée sur un oscilloscope tournera autour de la grille d'estimation. Le retard entre les trains horloges HP, HQ des deux voies ne sera pas constant et surtout changera de signe. On a représenté sur les figures 5a et 5b respectivement lesdits signaux HP et $\overline{HQ}$. Aux fronts montants de l'horloge HQ, l'horloge HP sera donc successivement soit au niveau 0, soit au niveau 1. La sortie S de la bascule 12 (Figure 5c) sera donc elle-même successivement soit au niveau 0, soit au niveau 1. Le monostable 13 recevra par conséquent en entrée un signal en créneau. Pour peu que sa durée d'état bloqué ait été choisie suffisamment longue, ce monostable 13 sera a priori maintenu par les fronts montants successifs qu'il reçoit en entrée, à un niveau 1 constant tant que l'on restera sur un faux accrochage.

Ainsi, ce système 8 délivrera en sortie, selon que l'on est bien accroché ou que l'on se trouve sur un faux accrochage, une tension 0 ou une tension 1. Ce niveau de tension en sortie du système 8 commande la position de l'interrupteur 10.

Un tel système 8 peut être encore complété ainsi que cela a été représenté sur la Figure 3 pour permettre la détermination modulo $\pi$ de la phase de la porteuse. Le système 8 représenté comporte une bascule 12 et un monostable 13 identiques à ceux représentés sur la Figure 2. Le signal à l'entrée D et le signal d'horloge de la bascule 12 sont également respectivement les trains horloges HP et HQ. La tension en sortie de la bascule 12 est envoyée outre sur le monostable 13, sur un circuit de validation de la boucle de récupération de porteuses 9. Ce circuit ne valide la boucle rapide de récupération de porteuses que lorsque toujours le train horloge de la même voie est en avance par rapport à l'autre. Sans ce circuit de validation de la boucle de récupération de porteuse, l'accrochage de l'oscillateur OLR peut se réaliser par quatre axes complexes déphasés de $\pi/2$ l'un par rapport à l'autre lorsque l'oscillateur OLR travaille à la fréquence de l'oscillateur d'émission. L'ambiguïté de phase est de $\pi/2$. Avec le circuit de validation de la bande de récupération de porteuse, on ne réalise l'accrochage que sur deux des quatre axes d'accrochage possibles. On aura donc déterminé la phase de la porteuse modulo $\pi$.

L'invention a été ici décrite dans le cadre d'une modulation MDP$_4$ et s'applique bien entendu à toute modulation quadratique décalée à m états, où m est un entier supérieur ou égal à 4.

Les signes de référence insérés après les caractéristiques techniques mentionnées dans les revendications, ont pour seul but de faciliter la compréhension de ces dernières, et n'en limitent aucunement la portée.

**Revendications**

1. Procédé de détection de faux accrochages d'un signal de référence sur un signal modulé en modulation quadratique numérique plurivalente décalée et à démoduler en démodulation numérique cohérente, dans lequel:
   - on récupère à partir des signaux en bande de base des trains de signaux horloges (HP, HQ) synchrones avec lesdits signaux en bande de base, caractérisé:
   - en ce qu'on observe le décalage entre lesdits trains de signaux horloges (HP, HQ), et
   - en ce qu'on détecte un faux accrochage lorsque ce décalage n'est pas de signe constant.

2. Procédé de démodulation numérique cohérente d'un signal initialement modulé en modulation numérique plurivalente décalée dans lequel:
   - on mélange ledit signal à démoduler (SHF) avec deux signaux de référence en quadrature afin d'obtenir les trains de signaux analogiques en bande de base correspondant au train de signaux binaires initiaux,
   - on régénère les trains de signaux en bande de base ainsi obtenus,
   - on corrige les signaux de référence, lorsqu'un faux accrochage est détecté, pour accrocher celui-ci en fréquence et en phase sur le signal à démoduler, caractérisé en ce qu'on détecte à cet effet un faux accrochage à l'aide du procédé de détection selon la revendication 1.

3. Procédé de démodulation selon la revendication 2, caractérisé en ce qu'on détecte la phase du signal de référence modulo $\pi$ lorsque le signe du décalage entre lesdits trains d'horloge (HP, HQ) prend une valeur prédéterminée.

4. Procédé de démodulation selon la revendication 3, caractérisé en ce qu'on mélange le signal à démoduler (SHF) avec le signal de référence et avec un signal en quadrature par rapport audit signal de référence,
   - on récupère les trains de signaux horloges (HP, HQ) synchronisés avec les signaux en bande de base ainsi obtenus,
   - on observe le signe du décalage entre les deux trains de signaux horloges ainsi obtenus,
   - on ne corrige le signal de référence en phase que lorsque le train de signaux horloge issu du mélange du signal à démoduler avec le signal de référence est en avance (en retard) par rapport au train de signaux horloge obtenu par le mélange du signal en quadrature par rapport au signal de référence avec le signal à démoduler, de sorte que la porteuse sur laquelle le signal de référence est accroché est déterminée modulo $\pi$.

5. Dispositif pour la mise en oeuvre du procédé selon la revendication 1, caractérisé en ce qu'il comporte des moyens (12, 13) aptes à détecter des modifications du signe du décalage entre lesdits trains horloges (HP, HQ).

6. Dispositif selon la revendication 5, caractérisé en ce que lesdits moyens comportent une bascule (12) recevant en son entrée horloge (H) le train (HQ) de signaux horloge d'une voie de démodulation et en une autre entrée (D) le train (HP) de signaux horloge d'une autre voie, ainsi qu'un circuit monostable (13) recevant en entrée le signal en sortie de ladite bascule (12).

7. Dispositif selon la revendication 6, caractérisé en ce que ladite bascule (12) est une bascule du type D.

8. Dispositif pour la mise en oeuvre du procédé de démodulation selon l'une des revendications 2 à 4, comportant un circuit de démodulation direct ($M_1$, $M_2$) pour le mélange du signal à démoduler (SHF) avec des signaux correspondant en fréquence et en phase au signal de référence, ledit circuit de démodulation comportant un oscillateur de réception (OLR) duquel est issue le signal de référence, les différentes voies en sortie du circuit de démodulation étant reliées chacune d'une part à un circuit de récupération de rythme (5, 6) et d'autre part à un échantillonneur régénérateur (4, 5) à deux entrées dont une reçoit le signal issu sur ladite voie du circuit de démodulation et dont l'autre reçoit le signal horloge (HP, HQ) en sortie du circuit de récupération de rythme, ledit dispositif comportant également un dispositif de récupération de porteuses (9), ainsi qu'un dispositif à rampe de tension (11), asservissant ledit oscillateur de réception pour le commander respectivement en phase et en fréquence, caractérisé en ce qu'il comporte un dispositif de détection de faux accrochage (8) selon l'une des revendications 6 ou 7, en fonction des informations de sortie duquel ledit dispositif de récupération de porteuse (9) et/ou ledit dispositif à rampe de tension (11) sont actionnés.

9. Dispositif selon la revendication 8, comportant un dispositif selon l'une des revendications 6 ou 7, caractérisé en ce qu'il comporte des moyens de validation du dispositif de récupération de porteuses (9), ces moyens ne validant ledit dispositif de récupération de porteuses (9) que lorsque le signal en sortie de la bascule (12) prend une valeur prédéterminée.

FIG.1

EP 0 538 737 A1

FIG. 2

FIG. 3

FIG.4a

FIG.4b

FIG.4c

FIG.4d

FIG.5a

FIG.5b

FIG.5c

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-5 042 052 (ROBERTS ET AL.)<br>* abrégé *<br>* figures 7,19-21 *<br>* colonne 2, ligne 25 - ligne 64 *<br>* colonne 10, ligne 6 - colonne 11, ligne 65 * | 1,2 | H04L27/22 |
| A | IEE PROCEEDINGS G. ELECTRONIC CIRCUITS & SYSTEMS.<br>vol. 138, no. 2, Avril 1991, STEVENAGE GB<br>pages 205 - 209<br>P. V. BRENNAN 'Technique allowing rapid frequency sweeping in aided-acquisition phase-locked loops'<br>* page 205, colonne de gauche, ligne 22 - colonne de droite, ligne 32; figures 1,2 * | 1 | |
| A | IEE PROCEEDINGS I. SOLID- STATE & ELECTRON DEVICES.<br>vol. 137, no. 1, Février 1990, STEVENAGE GB<br>pages 25 - 32<br>P. B. KENINGTON ET AL. 'Novel acquisition-aid design for the split-loop phase-lock receiver'<br>* le document en entier * | 1 | DOMAINES TECHNIQUES RECHERCHES (Int. Cl.5 )<br><br>H04L<br>H03L<br>H03D |
| A | ELECTRONIC COMPONENTS AND APPLICATIONS.<br>vol. 9, no. 2, 1989, EINDHOVEN NL<br>pages 66 - 89<br>W. ROSINK 'All-digital phase-locked loops using the 74HC/HCT297'<br>* page 68, colonne de droite, dernier alinéa - page 69, colonne de gauche *<br>* page 78, colonne de gauche, ligne 1 - colonne de droite, ligne 10; figures 4,5,15-17 * | 6,7 | |

-----

Le présent rapport a été établi pour toutes les revendications

| Lieu de la recherche | Date d'achèvement de la recherche | Examinateur |
|---|---|---|
| LA HAYE | 07 JANVIER 1993 | GRIES T.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)